# EUROPEAN PATENT APPLICATION

(11) **EP 4 254 142 A1**
(43) Date of publication of application: **04.10.2023**
(21) Application number: 23152203.8
(22) Date of filing: 18.01.2023
(51) Int. Cl.: G06F 3/01, G06F 3/0354, B60K 35/00, B60K 37/00, G06F 3/041

(54) **HAPTIC INPUT DEVICE**

(30) Priority: 31.03.2022 GB 202204722
(71) Applicant: Aptiv Technologies Limited, St. Michael (BB)
(72) Inventor: BOHDAN, Lukasz, DUBLIN, 2 (IE); USZKUR, Marek, DUBLIN, 2 (IE)
(74) Representative: Lewis Silkin LLP

(57) **Abstract**

Haptic input device (1) including an input region (3) and a force detection sensor (6) for detecting a force applied to the input region (3) by the user (2) for registering a user input. A haptic stimuli generator (7) is provided, as well as a controller (5). The controller (5) controls the haptic stimuli generator (7) to provide haptic feedback in response to the detection of force applied by the user (2) to the input region (3). The controller (5) is configured to vary the haptic feedback strength based, at least in part, on the force applied.

## Description

### Introduction

The present disclosure relates to a haptic input device, a controller for a haptic input device, a method of controlling a haptic input device, and a non-transitory computer readable medium for implementing the method. The present invention is particularly relevant to automotive input devices and other such switches.

### Background

In modern vehicles, traditional mechanically operable switches, such as push buttons, are being replaced by active haptic systems based on vibration generators. Such vibration generators typically use linear resonant actuators, eccentric rotating mass motors, and solenoids to provide haptic stimuli as feedback. However, for certain applications, the effectiveness of conventional haptic feedback devices to generate a desired touch stimulus is reduced. For example, in automotive applications, exposed interior surfaces, so-called 'A-surfaces', will often act to attenuate vibrations. Consequently, it is often not possible to easily integrate conventional haptic devices into these A-surfaces, such as in the headliner material covering the cabin ceiling, without adopting significant design changes. For example, the input/haptic feedback region of the switch may need to be provided as a rigid part surrounded by a gap or a thin walled region. Consequently, interior styling is affected. For instance, it is not possible to adopt a seamless design, with gaps or thinner walled sections causing sink marks. Equally, the sensor packaging will often need to be bigger and heavier to accommodate sufficiently large vibrational actuators to generate the required stimuli.

Accordingly, there remains a need for an improved haptic feedback device.

### Summary

According to a first aspect, there is provided a haptic input device including: an input region; a force detection sensor for detecting a force applied to the input region by the user for registering a user input; a haptic stimuli generator; and a controller for controlling the haptic stimuli generator to provide haptic feedback in response to the detection of force applied by the user to the input region, wherein the controller is configured to vary the haptic feedback strength based, at least in part, on the force applied.

In this way, the level of haptic feedback varies as the user interacts with the input device. This thereby allows for a more engaging user interaction which is able to replicate aspects of a user's engagement with a traditional mechanical button or other switches. This may thereby improve user awareness of the haptic feedback, even through surfaces which may attenuate vibrations.

In embodiments, the controller is configured to register a user input in response to a user pressing the input region in an input operation, wherein the controller is configured to vary the haptic feedback strength over the duration of the input operation. In this way, the haptic input device may simulate a user experience that is akin to using a mechanical button. That is, the resistive force-travel profile for mechanical buttons will typically vary through the button's travel as it is actuated in an input operation. This characteristic `feel' when a button is pressed may thereby be simulated by dynamically varying the level of haptic stimuli generated as the user applies force to the input region surface.

In embodiments, the haptic feedback generated during the input operation is for replicating a button pressing operation. In this way, the input device may simulate the feel of a mechanical button.

In embodiments, the controller is configured to vary the haptic feedback strength over the duration of the input operation according to a simulated force-travel profile. In this way, a force-travel profile associated with a mechanical switch may be replicated artificially using the haptic stimuli. That is, by monitoring the user's input force, such as their finger pressure against the input surface, the haptic stimuli level may be adjusted so that the combination of these forces map to the forces that would be associated with a mechanical switch. Accordingly, the input device may replicate the feel of a `real' switch according to the specific application requirements.

In embodiments, the simulated force-travel profile comprises a first pressing phase where the haptic feedback strength is increased as the detected force applied to the input region increases. In this way, the feel of a user's engagement and travel using a mechanical switch may be replicated by introducing additional artificial stimuli as the user presses against the input region.

In embodiments, the haptic feedback strength is increased during the first pressing phase up to a first peak level. This thereby provides feedback to a user that the switch is being engaged, even where their actual engagement force is lighter than would be associated with a conventional switch. The haptic feedback strength thereby provides artificial stimuli to replicate the intensity of using a conventional switch.

In embodiments, the simulated force-travel profile further comprises a second pressing phase after the first pressing phase where the haptic feedback strength is decreased as the detected force applied to the input region increases. In this way, the `snap' effect experienced with conventional switches, where the force needed to depress them drops, may be replicated by the input device.

In embodiments, the haptic feedback strength is decreased during the second pressing phase down to a first trough level. In this way, the user is provided with the impression of button travel down to a bottom point as they continue to apply pressure on the input region.

In embodiments, the simulated travel-force profile is adjustable by the user. In this way, a user may modify feedback stimuli according to their preferences. For example, the feedback strength may be adjusted based on user adjusted settings.

In embodiments, the controller is configured to register a user input when the force applied by the user to the input region exceeds an activation threshold. In this way, the user may register an input by continuing to press down on the input region.

In embodiments, the end of the second pressing phase comprises an activation point, and the activation threshold coincides with the activation point. In this way, the user input is registered once the applied simulated force-travel profile sequence has replicated an input operation.

In embodiments, the simulated force-travel profile further comprises an activated phase after the activation threshold has been reached where the haptic feedback strength is increased as the detected force applied to the input region increases above the activation threshold. In this way, once a user input has been registered, the haptic feedback may replicate the intensity of a mechanical button bottoming out at the end of its travel.

In embodiments, the haptic input device further includes an A-surface, and wherein the A-surface comprises the input region. In this way, the device may be integrated into a surface, such as an exposed interior surface of a vehicle. This may thereby allow for inputs to be integrated seamlessly into interior surfaces of a vehicle.

In embodiments, the haptic stimuli generator comprises at least one of a transcutaneous electrical nerve stimulation (TENS) generator, an electrostatic feedback generator, and a vibrational generator. Other haptic stimuli generator methods may also be used.

In embodiments, the haptic stimuli generator comprises the TENS generator, wherein the TENS generator comprises at least two electrodes located within the input region. In this way, a current may be passed across the electrodes for stimulating a user feedback response. In preferred embodiments, the TENS generator is configured for stimulating a user's pressure mechanoreceptor nerve fibres, for example in their finger. In embodiments, the at least two electrodes comprises a plurality of electrodes arranged in an array.

In embodiments, the haptic feedback strength is varied, at least in part, by varying the frequency of the action potential excited by the at least two electrodes. In this way, the haptic feedback may stimulate nerves directly to provide the perception of a change in intensity, without increasing the applied current and/or voltage.

In embodiments, the haptic feedback strength is varied, at least in part, by varying the impulse duration applied by the at least two electrodes. In this way, the haptic feedback may stimulate nerves directly to provide the perception of change in intensity, without increasing the applied current and/or voltage.

In embodiments, the haptic stimuli generator is configured so that the stimuli applied by the at least two electrodes stimulates nerve fibres associated with pressure mechanoreceptors in the user's finger. In this way, the user may be provided with stimuli which gives the impression of finger pressure, and thereby provides them with the feel of pressing a mechanical button using a haptic input device.

In embodiments, the input operation further comprises a return phase after a user has registered an input, wherein the controller is configured to vary the haptic feedback strength during the return phase. In this way, the user is provided with the feel of releasing a mechanical button.

In embodiments, the controller is configured to vary the haptic feedback strength during the return phase according to a simulated button release force-travel profile. In this way, a force-travel profile associated with the release of a mechanical switch may be replicated artificially using the haptic stimuli.

In embodiments, the haptic input device further includes a second stimuli generator, where the second stimuli generator is different from the haptic stimuli generator and the controller is configured to control the second stimuli generator to provide feedback in response to the detection of force applied by the user to the input region. In this way, a multimodal feedback response may be provided by providing two different feedback indicators. In embodiments, the strength of the feedback generated by the second stimuli generator may be varied based, at least in part, on the force applied. For example, in embodiments, the second stimuli may be varied according to a simulated force-travel profile.

In embodiments, the second stimuli generator is a sound generator. In this way, 'clicks' or other switch sounds may be replicated to indicate stages of the simulated button travel sequence.

In embodiments, the controller is configured to generate a sound feedback following the start of the second pressing phase. In this way, clicks' or other switch sounds may be replicated to simulate the 'snap' effect experienced in conventional switches.

In embodiments, the force detection sensor comprises at least one of a tensometric, capacitive or optical force sensor. In this way, the controller may be provided with an electronic sensor input for determining the pressure being applied by the user to the input region. In other embodiments, other sensor inputs may be used.

According to a further aspect, there is provided an automotive switch device including the haptic input device according to the above. In this way, a switch device for automotive applications may be provided.

According to a further aspect, there is provided a vehicle interior A-surface comprising an automotive switch device according to the above.

According to a further aspect, there is provided a controller for controlling a haptic input device, wherein the controller includes: a force detection sensor input for receiving a detected force applied to an input region of the haptic input device by a user registering a user input; a haptic stimuli generator output for controlling a haptic stimuli generator of the haptic input device to provide haptic feedback in response to the detection of force applied by the user; wherein the controller is configured to vary the haptic feedback strength based, at least in part, on the force applied. In this way, a controller may be provided for use with an existing haptic input device.

According to a further aspect, there is provided a method of controlling a haptic input device, the method including the steps of: receiving a detected force applied to an input region of the haptic input device by a user registering a user input; and controlling a haptic stimuli generator of the haptic input device to provide haptic feedback in response to the detection of force applied by the user; wherein the haptic feedback strength is varied based, at least in part, on the force applied. In this way, a method for use with the above apparatus is provided.

In embodiments, the step of controlling the haptic stimuli generator comprises varying the haptic feedback strength over the duration of an input operation according to a simulated force-travel profile.

According to a further aspect, there is provided a non-transitory computer readable medium comprising instructions, which when executed by a processor, cause the processor to execute the above method. In this way, a computer software product may be provided for implementing the above method.

### Brief Description of Drawings

An illustrative embodiment will now be described with reference to the accompanying drawings in which:
Figure 1 shows a cross sectional illustration of a haptic input device according to an illustrative embodiment; and
Figure 2 shows a schematic illustration of a force-travel profile for use in the above embodiment.

### Detailed Description

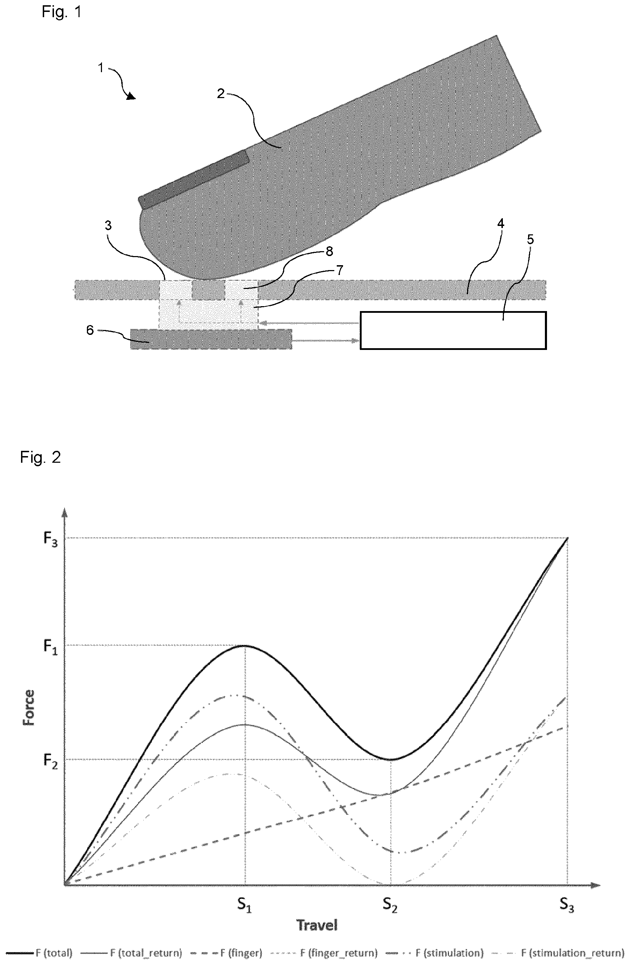

Figure 1 shows a vertical cross-sectional illustration of a haptic input device 1 according to an illustrative embodiment. In this embodiment, the haptic input device 1 has been integrated into an A-surface 4 of a vehicle's interior. As such, an input region 3 is exposed on the upper surface for contact by a user's finger 2. A force detection sensor 6 is provided beneath the input region 3 for detecting a force applied to the input region 3 by the user's finger 2 for registering a user input.

A haptic stimuli generator 7 is provided, and in this embodiment is implemented as a TENS generator having an array of electrodes 8 exposed on the upper surface of the input region 3. In figure 1, two electrodes 8 are visible in the drawing, but it will be understood that a plurality of electrodes may be provided in, for example, a grid array over the input region 3. For example, a 3x3 matrix of electrodes may be provided. In other embodiments, the array may be implemented as, for instance, circular concentric electrodes or in a net-like structure. Each electrode 8 is electrically separated from the others and, in this embodiment, receives a direct-independent input for allowing independent control. It will be understood that in other embodiments, the electrodes may alternatively be grouped into fields, with each field being independently controlled.

The haptic input device 1 further comprises a controller 5 which receives a force sensor input from the force detection sensor 6 and controls the haptic stimuli generator 7 to apply haptic feedback stimuli to the user's finger 2. In this embodiment, the controller 5 applies a current across the electrodes in a series of pulses for artificially stimulating the nerve fibres associated with pressure mechanoreceptors in the user's finger 2. The current and voltage level may be selected based on gaussian modelling using user testing to find an appropriate response level. At the same time, the frequency and duration of pulses may be varied under the control of the controller 5 to adjust the haptic feedback strength perceived by the user.

In this connection, in use, the controller 5 varies the haptic feedback strength based on the detected force applied by the user's finger 2 to the input region 3. As such, the problems with conventional haptic feedback methodologies may be mitigated.

In this connection, the TENS electrode array of the haptic stimuli generator 7 may controllably induce an action potential in the pressure mechanoreceptors' nerve fibres for simulating the effect of a user engaging a mechanical button or switch. That is, a generated stimuli may be used to supplement the force-travel characteristic created by the user's finger 2 applying pressure to the input region 3 by adding an artificial component to the pressure impression of the user. The artificial component force equivalent may be defined statistically, based on trials with volunteers who compare the artificial TENS stimuli to a real force impression. Both the natural impression caused by the finger pressure detected by the pressure sensor 6 and the artificial pressure generated by the TENS electrodes may be summed together to give a final impression. This allows the controller 6 to simulate the force-travel profile associated with a real-world mechanical button during a switching operation by varying the stimuli strength based on a measured pressure. The controller 6 may access stored force-travel profiles from a memory and implement these. For example, in embodiments, one or more pre-set or customisable force-travel profiles may be stored in a memory and may be accessed for implementation by the controller 6.

To explain this further, Figure 2 shows a schematic illustration of a force-travel profile which may be implemented using the above arrangement. The thicker solid line shows a force-travel profile for the travel of a conventional mechanical button through the duration of an activation pressing operation. The thinner solid line shows the corresponding force-travel profile characteristics during the button return following activation. It will be understood that the target force-travel profiles may be adjusted based on a manufacturer's or user's requirements. For instance, a vehicle manufacturer may wish to apply a particular feel to the buttons in their vehicle.

To replicate this force-travel profile, the controller is configured to read the sensor input from the pressure sensor 6 and adapt the haptic feedback strength accordingly. In this connection, the dashed line shows the measured force applied to the input region 3 by the user's finger 2. This therefore represents the real force component against the A-surface 4, as measured by the pressure sensor 6. As the surface 4 is flat and rigid, without additional stimuli, a finger would experience a natural finger force-travel profile, with both the activation and return phases being the same. The controller 6 may control the haptic feedback generator 7 to supplement the real force component with an applied haptic feedback strength to match to the desired force-travel profile shown by the solid lines. In this respect, in this example, the thicker and thinner "dash-dot-dot" lines represent the stimuli generated under the control of the controller 6 for the activation and return phases, respectively. As shown, throughout every point of the force-travel graph the `artificial' force component is adapted based on the real force component level in order to provide a sum of both components that is equal to the value defined by the desired force-travel profile.

In this connection, starting at O,O, the user may push the input region 3 more softly than in a conventional mechanical switch, but due to the artificial stimuli provided by the haptic feedback generator 7, the end impression may be similarly intense. When the pressing action reaches the peak force at point [S1,F1] the controller 6 may drop the haptic feedback strength rapidly to imitate the 'snap' associated with a mechanical switch. In embodiments, at this stage, the system may generate a sound effect to provide a multimodal feedback impression.

When the pressing action reaches the activation point [S2,F2], the function related to the switch is activated. This may be triggered by a pre-determined force value detected on the negative slope after the peak force point [S1,F1]. This may thereby avoid premature activation when the force has the same value on the positive slope before the peak. As such, the controller 6 may ignore the activation force value on the positive slope between the points [S2,F2] and [S3,F3] and in other places where the activation is unwanted.

Past the activation point, the haptic feedback strength is increased again proportionally with increasing detected pressure until the sum of both components reaches the end point [S3,F3]. The return action works analogously, adapting to the requested return curve.

Accordingly, with the above arrangement, the level of haptic feedback varies as the user interacts with the input device 1. This thereby allows for a more engaging user interaction which is able to replicate aspects of a user's engagement with a traditional mechanical button or other switches. This may thereby improve user awareness of the haptic feedback, even through surfaces which may attenuate vibrations. At the same time, the TENS generator 7 is configured for stimulating a user's pressure mechanoreceptor nerve fibres in their finger. This allows replication of the feel of using a mechanical switch, with the user experiencing the button travel, despite engaging with a flat, rigid input region.

It will be understood that the embodiment illustrated above shows an application only for the purposes of illustration. In practice, embodiments may be applied to many different configurations, the detailed embodiments being straightforward for those skilled in the art to implement.

In this connection, for example, whilst the above embodiment employs a haptic generator based on TENS technology, it will be understood that it may be applied to other haptic generators, such as vibrational or electrostatic generators. Furthermore, whilst the example above relates to an automotive switch, it will be understood that embodiments may be applied to other arrangements and assembly configurations.

## Claims

1. A haptic input device comprising:
an input region;
a force detection sensor for detecting a force applied to the input region by the user for registering a user input;
a haptic stimuli generator; and
a controller for controlling the haptic stimuli generator to provide haptic feedback in response to the detection of force applied by the user to the input region, wherein the controller is configured to vary the haptic feedback strength based, at least in part, on the force applied.

2. A haptic input device according to claim 1, wherein the controller is configured to register a user input in response to a user pressing the input region in an input operation, wherein the controller is configured to vary the haptic feedback strength over the duration of the input operation.

3. A haptic input device according to claim 2, wherein the controller is configured to vary the haptic feedback strength over the duration of the input operation according to a simulated force-travel profile.

4. A haptic input device according to claim 3, wherein the simulated force-travel profile comprises a first pressing phase where the haptic feedback strength is increased up to a first peak level as the detected force applied to the input region increases; and wherein the simulated force-travel profile further comprises a second pressing phase after the first pressing phase where the haptic feedback strength is decreased down to a first trough level as the detected force applied to the input region increases.

5. A haptic input device according to any of claims 3 or 4, wherein the simulated travel-force profile is adjustable by the user.

6. A haptic input device according to any of claims 3-5, wherein one or more pre-set or customisable travel-force profiles is stored in a memory.

7. A haptic input device according to any preceding claim, further comprising a vehicle A-surface and wherein the A-surface comprises the input region.

8. A haptic input device according to any preceding claim, wherein the haptic stimuli generator comprises a TENS generator, and wherein the TENS generator comprises at least two electrodes located within the input region.

9. A haptic input device according to claim 8, wherein the haptic feedback strength is varied, at least in part, by varying the frequency of the action potential excited by the at least two electrodes, and/or
by varying the impulse duration applied by the at least two electrodes.

10. A haptic input device according to any preceding claim, further comprising a second stimuli generator, where the second stimuli generator is different from the haptic stimuli generator and the controller is configured to control the second stimuli generator to provide feedback in response to the detection of force applied by the user to the input region.

11. A haptic input device according to any of claims 2 or claims 3-10 when dependent via claim 2, wherein the input operation further comprises a return phase after a user has registered an input, wherein the controller is configured to vary the haptic feedback strength during the return phase according to a simulated button release force-travel profile.

12. A vehicle interior A-surface comprising the haptic input device according to any preceding claim.

13. A method of controlling a haptic input device, the method comprising the steps of:
receiving a detected force applied to an input region of the haptic input device by a user registering a user input; and
controlling a haptic stimuli generator of the haptic input device to provide haptic feedback in response to the detection of force applied by the user;
wherein the haptic feedback strength is varied based, at least in part, on the force applied.

14. A method according to claim 13, wherein the step of controlling the haptic stimuli generator comprises varying the haptic feedback strength over the duration of an input operation according to a simulated force-travel profile.

15. A non-transitory computer readable medium comprising instructions, which when executed by a processor, cause the processor to execute the method according to any one of claims 13 or 14.
